(19) Europäisches Patentamt / European Patent Office / Office européen des brevets

(11) **EP 2 026 461 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(51) Int Cl.:
***H02P 21/14*** *(2016.01)*

(21) Anmeldenummer: **08014114.6**

(22) Anmeldetag: **07.08.2008**

(54) **Verfahren zur sensorlosen Regelung einer Drehstrommaschine**

Method for sensorless control of a three-phase machine

Procédé de régulation sans capteur d'un moteur à courant triphasé

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.08.2007 AT 12682007**

(43) Veröffentlichungstag der Anmeldung:
**18.02.2009 Patentblatt 2009/08**

(73) Patentinhaber: **Schrödl, Manfred**
**7223 Sieggraben (AT)**

(72) Erfinder: **Schrödl, Manfred**
**7223 Sieggraben (AT)**

(74) Vertreter: **Graschitz, Roland**
**Felfernig und Graschitz Rechtsanwälte GmbH**
**Thomas A. Edison Straße 2**
**7000 Eisenstadt (AT)**

(56) Entgegenhaltungen:
**WO-A1-99/39430     DE-A1-102006 046 638**

- **M Schrödl ET AL: "Sensorlose Drehzahl-und Lageregelung von Permanentmagnet-Synchronmaschinen auf Basis des INFORM-Verfahrens", e&i Elektrotechnik und Informationstechnik, February 2000, Vol. 117, issue 2, 1. Februar 2000 (2000-02-01), Seiten 103-117, XP055095053, Gefunden im Internet: URL:http://rd.springer.com/content/pdf/10.1007/BF03158596.pdf [gefunden am 2014-01-07]**

**Beschreibung**

Die Erfindung betrifft ein Verfahren zur mechanisch sensorlosen Regelung einer Drehstrommaschine, vorzugsweise einer dreiphasigen, Drehstrommaschine. Ferner betrifft die Erfindung auch eine Schaltungsanordnung zur Durchführung des Verfahrens.

Aus dem Artikel "Sensorlose Drehzahl- und Lageregelung von Permanentmagnet-Synchronmaschine auf Basis des INFORM-Verfahrens von M. Schrödl ist ein Verfahren zur mechanischen sensorlosen Regelung einer Drehstrommaschine beschrieben, wobei zumindest während der Zeit der Rotorpositionsauswertung herangezogenen Umrichterschalterstellungen die Stromführung in mindestens zwei Phasen erfolgt, wobei immer alle 3 Umrichterphasen aktiv sind.

Weiters ist aus der WO 99/39430 A1 ein Verfahren zur Regelung von einer mechanisch drehgeberlosen Drehstrommaschine, insbesondere asynchron oder synchron laufende Maschine, für beliebige Betriebspunkte beschrieben. Bei Asynchronmaschinen erden die zur feld- bzw. rotororientierten Regelung notwendige Flussrichtung und bei synchron laufenden Maschinen die Rotorposition über die räumlich magnetischen Leitwertschwankungen in der Maschine messtechnisch erfasst, wobei immer alle Phasen aktiv sind.

In der DE 10 2006 046638 A1 ist eine Vorrichtung zur Ermittlung der Drehlage des Rotors einer im Stern verschaltete Polwicklungsphasenstränge aufweisenden elektrischen Maschine, mit einer Einrichtung zum Anlegen von Spannungsimpulsen an wenigstens einen der Phasenstränge und einer Einrichtung, welche zur Ermittlung der Drehlage des Rotors durch die Spannungsimpulse erzeugte Sternpunktpotentiale auswertet, bekannt.

Zur hochwertigen Regelung von Drehstrommaschinen werden feldorientierte Regelverfahren angewendet, die unter Erfassung des magnetischen Flusses eine entkoppelte Drehmomenten- und Flussverkettungsführung ermöglichen. Bei Drehstrommaschinen nach dem Prinzip der Synchronmaschine, entweder durch Dauermagnete oder durch eine eigene Erregerwicklung, wird über den Statorstrom dabei hauptsächlich die Aufgabe der Drehmomentführung vom Statorstrom übernommen, die Bereitstellung der Flussverkettung stellt dabei meist eine sekundäre Aufgabe dar, die primär von den Dauermagneten oder der Erregerwicklung vorgenommen wird. Bei Drehstrommaschinen nach dem Prinzip der Asynchronmaschine oder der Reluktanzmaschine übernimmt der Statorstrom beide Aufgaben.

Der Nachteil dieser Verfahren ist, dass zur hochwertigen Flussbestimmung entweder ein mechanischer Geber oder ein hochwertiges Maschinenmodell nötig ist, wodurch die Flussposition, die bei synchron laufenden Maschinen mit der Rotorposition in engem Zusammenhang steht, aufwändig ermittelt werden muss.

Der Nachteil des mechanischen Gebers ist, dass er die Robustheit des Antriebs reduziert und gleichzeitig sowohl Volumen benötigt als auch zusätzliche Kosten verursacht.

Der Nachteil des hochwertigen Maschinenmodells ist, dass es entweder nur ab einer gewissen Mindestdrehzahl funktioniert, wenn es auf Basis der induzierten Spannung arbeitet oder einen hohen Signalverarbeitungsaufwand benötigt, wenn es auf Reaktanzmessungen basiert.

Weiters ist aus DE 10 2006 066 638 A1 ein Verfahren bekannt, bei dem eine Drehstrommaschine in einem vereinfachten Regelungsmodus, nämlich in der 60-Grad Stromblocksteuerung, betrieben wird, wobei die für diesen Modus normalerweise eingesetzten Hallsensoren durch eine mechanisch sensorlose Lösung ersetzt werden. Der Nachteil dieses Verfahrens ist, dass der Sternpunkt der Maschine zur Messung von Phasenspannungen gegenüber Sternpunktpotential benötigt wird, wodurch eine üblicherweise nicht ausgeführte aufwändige elektrische Verbindung aus der Maschine zur Signalverarbeitung vorhanden sein muss.

Aufgabe der Erfindung ist es ein Verfahren der eingangs zitierten Art zu schaffen, das einerseits die oben zitierten Nachteile vermeidet und das auch einen einfacheren Aufbau für die Messtechnik erfordert.

Die Aufgabe wird durch die Erfindung gelöst.

1. Das erfindungsgemäße Verfahren ist dadurch gekennzeichnet, dass zumindest während der Zeit der zur Rotorpositionsauswertung herangezogenen Umrichterschalterstellungen die Stromführung in zwei Phasen erfolgt und mindestens eine Phase stromlos ist und eine Information bzw. Informationen über den Rotor- bzw. Flusswinkel aus der durch Subtraktion von zwei während unterschiedlicher zeitnah hintereinander auftretenden Umrichterschalterstellungen gültigen Spannungsgleichungen erfolgt, wobei die beiden unterschiedlichen Umrichterschalterstellungen dieselbe stromlose Phase aufweisen und die Spannungsgleichungen von zwei zeitnah hintereinander auftretenden Umrichterschalterstellungen die Gestalt

$$u_{\alpha,I} = \frac{di_{\beta,I}}{d\tau} \cdot \frac{\ell_d - \ell_q}{2} \cdot \sin 2\gamma + \omega_m \cdot (\ell_d - \ell_q) \cdot i_{\beta,I} \cdot \cos 2\gamma - \omega_m \cdot \psi_M \cdot \sin(\gamma + \Delta\gamma)$$

$$u_{\beta,I} = \frac{di_{\beta,I}}{d\tau} \cdot \left[ \frac{\ell_d + \ell_q}{2} - \frac{\ell_d - \ell_q}{2} \cdot \cos 2\gamma \right] + r_s \cdot i_{\beta,I} + \omega_m \cdot (\ell_d - \ell_q) \cdot i_{\beta,I} \cdot \sin 2\gamma + \omega_m \cdot \psi_M \cdot \cos(\gamma + \Delta\gamma)$$

$$u_{\alpha,II} = \frac{di_{\beta,II}}{d\tau} \cdot \frac{\ell_d - \ell_q}{2} \cdot \sin 2\gamma + \omega_m \cdot (\ell_d - \ell_q) \cdot i_{\beta,II} \cdot \cos 2\gamma - \omega_m \cdot \psi_M \cdot \sin(\gamma + \Delta\gamma)$$

$$u_{\beta,II} = k \cdot u_{\beta,I} = \frac{di_{\beta,II}}{d\tau} \cdot \left[ \frac{\ell_d + \ell_q}{2} - \frac{\ell_d - \ell_q}{2} \cdot \cos 2\gamma \right] + r_s \cdot i_{\beta,II} + \omega_m \cdot (\ell_d - \ell_q) \cdot i_{\beta,II} \cdot \sin 2\gamma + \omega_m \cdot \psi_M \cdot \cos(\gamma + \Delta\gamma)$$

$$k \in [-1,0]$$

haben und die Subtraktion die Differenz-Messgleichung

$$u_{\alpha,I} - u_{\alpha,II} = \frac{[di_{\beta,I} - di_{\beta,II}]}{d\tau} \cdot \frac{\ell_d - \ell_q}{2} \cdot \sin 2\gamma \qquad \text{(x)}$$

$$(1-k) \cdot u_{\beta,I} = \frac{[di_{\beta,I} - di_{\beta,II}]}{d\tau} \cdot \left[ \frac{\ell_d + \ell_q}{2} - \frac{\ell_d - \ell_q}{2} \cdot \cos 2\gamma \right] \qquad \text{(y)}$$

lautet.

Mit dem erfindungsgemäßen Verfahren ist es erstmals möglich, dass zur Regelung einer Drehstrommaschine lediglich vorzugsweise eine Klemmenspannungsmessung der Anschlussklemmen gegenüber einem beliebigen Bezugspunkt und gegebenenfalls eine Strommessung entweder in den Phasen oder alternativ vorzugsweise im Zwischenkreis notwendig ist. Dadurch ist eine sehr einfache Erfassung der elektrischen Größen möglich.
In vorteilhafter Weise vermeidet das erfindungsgemäße Verfahren die Nachteile des Standes der Technik, obwohl es ähnlich wie im Stand der Technik die vereinfachte Betriebsweise, nämlich eine zweiphasige Stromführung und die dritte Phase gesperrt - in der Ausführung als Dreiphasenmaschine, zumindest während der mechanisch sensorlosen Winkelermittlung aufweist, jedoch keinerlei Sternpunktverbindung aus der Drehstrommaschine benötigt.
Unter einer Information bzw. Informationen werden Winkel-Informationen über den Rotor- bzw. Flusswinkel oder in einer monotonen Beziehung stehende Informationen über den Rotor- bzw. Flusswinkel verstanden.
Nach einer weiteren Ausgestaltung der Erfindung wird der Sinus des doppelten Rotor- bzw. Flusswinkels aus der Differenz der auf das gleiche beliebig wählbare Bezugspotential bezogenen Spannungen an der stromlosen Phase während der beiden unterschiedlichen Umrichterschalterstellungen, dividiert durch die Differenz der beiden während der unterschiedlichen Umrichterschalterstellungen auftretenden Stromanstiege in den leitenden Phasen und weiters dividiert durch die halbe Induktivitätsdifferenz in Direkt- und Querachse ermittelt. Dadurch wird kein Sternpunktpotential benötigt, welches im Allgemeinen nur unter hohem Aufwand einer Messung zugänglich gemacht werden kann.

1. Gemäß einer weiteren Ausgestaltung der Erfindung wird aus dem ermittelten Sinus des doppelten Rotor- bzw. Flusswinkels der Winkel des Sollstromraumzeigers, vorzugsweise eingeschränkt auf die beim durch zwei stromführende Motorphasen und eine stromlose Phase gekennzeichneten vereinfachten Betrieb möglichen Stromraumzeigerrichtungen, berechnet und die Spannungsgleichungen von zwei zeitnah hintereinander auftretenden Umrichterschalterstellungen die Gestalt

$$u_{\alpha,I} = \frac{di_{\beta,I}}{d\tau} \cdot \frac{\ell_d - \ell_q}{2} \cdot \sin 2\gamma + \omega_m \cdot (\ell_d - \ell_q) \cdot i_{\beta,I} \cdot \cos 2\gamma - \omega_m \cdot \psi_M \cdot \sin(\gamma + \Delta\gamma)$$

$$u_{\beta,I} = \frac{di_{\beta,I}}{d\tau} \cdot \left[ \frac{\ell_d + \ell_q}{2} - \frac{\ell_d - \ell_q}{2} \cdot \cos 2\gamma \right] + r_s \cdot i_{\beta,I} + \omega_m \cdot (\ell_d - \ell_q) \cdot i_{\beta,I} \cdot \sin 2\gamma + \omega_m \cdot \psi_M \cdot \cos(\gamma + \Delta\gamma)$$

$$u_{\alpha,II} = \frac{di_{\beta,II}}{d\tau} \cdot \frac{\ell_d - \ell_q}{2} \cdot \sin 2\gamma + \omega_m \cdot (\ell_d - \ell_q) \cdot i_{\beta,II} \cdot \cos 2\gamma - \omega_m \cdot \psi_M \cdot \sin(\gamma + \Delta\gamma)$$

$$u_{\beta,II} = k \cdot u_{\beta,I} = \frac{di_{\beta,II}}{d\tau} \cdot \left[ \frac{\ell_d + \ell_q}{2} - \frac{\ell_d - \ell_q}{2} \cdot \cos 2\gamma \right] + r_s \cdot i_{\beta,II} + \omega_m \cdot (\ell_d - \ell_q) \cdot i_{\beta,II} \cdot \sin 2\gamma + \omega_m \cdot \psi_M \cdot \cos(\gamma + \Delta\gamma)$$

$$k \in \left[-1,0\right]$$

haben und die Subtraktion die Differenz-Messgleichung

$$u_{\alpha,I} - u_{\alpha,II} = \frac{\left[di_{\beta,I} - di_{\beta,II}\right]}{d\tau} \cdot \frac{\ell_d - \ell_q}{2} \cdot \sin 2\gamma \qquad (x)$$

$$(1-k) \cdot u_{\beta,I} = \frac{\left[di_{\beta,I} - di_{\beta,II}\right]}{d\tau} \cdot \left[ \frac{\ell_d + \ell_q}{2} - \frac{\ell_d - \ell_q}{2} \cdot \cos 2\gamma \right] \qquad (y)$$

lautet.

. Dadurch ist eine dynamisch hochwertige feld- oder rotororientierte Regelung der Maschine mit geringem Hardwareaufwand und ohne mechanischen Lagesensor bis zum Stillstand möglich.

Nach einer Weiterbildung der Erfindung wird das Vorzeichen des Sinus des doppelten Rotor- bzw. Flusswinkels aus dem Vorzeichen der Differenz der Spannungen an der stromlosen Phase während der beiden unterschiedlichen Umrichterschalterstellungen bei bekanntem Vorzeichen der Induktivitätsdifferenz in Direkt- und Querachse ermittelt. Dadurch kann eine weitere Vereinfachung der Spannungserfassung erzielt werden.

Gemäß einer weiteren Ausgestaltung der Erfindung wird der Vorzeichenwechsel des Sinus des doppelten Rotor- bzw. Flusswinkels, welcher mit dem Nulldurchgang des Rotor- bzw. Flusswinkels in Bezug auf die Achse der stromlosen Phase korrespondiert, als Kriterium zum Weiterschalten des Stromraumzeigers im Sinne einer hohen Drehmomentausbeute, verwendet. Dadurch wird mit geringem Hardwareaufwand eine gute Dynamik des Antriebs bei kleinen Drehzahlen erreicht.

Nach einer weiteren Ausgestaltung der Erfindung wird das auf dem Vorzeichenwechsel des Sinus des doppelten Rotor- bzw. Flusswinkels basierende Kriterium zum Weiterschalten des Stromraumzeigers zum Zwecke einer möglichst hohen Drehmomentausbeute um eine monoton mit dem Kehrwert einer geschätzten Rotor- bzw. Flussdrehzahl steigende Weiterschalt-Zeitverzögerung gegenüber dem Zeitpunkt des genannten Vorzeichenwechsels verbessert. Dadurch kann die Drehmomentenausbeute noch weiter gesteigert werden.

Gemäß einer weiteren Ausgestaltung der Erfindung wird der Cosinus des doppelten Rotor- bzw. Flusswinkels aus der Differenz der verketteten Spannungen der stromführenden Phasen während der beiden unterschiedlichen Umrichterschalterstellungen, dividiert durch die Differenz der beiden während der unterschiedlichen Umrichterschalterstellungen auftretenden Stromanstiege in den leitenden Phasen sowie anschließender Subtraktion des arithmetischen Mittels aus Längs- und Querinduktivität und danach anschließender Division durch die halbe Induktivitätsdifferenz in Quer- und Längsachse ermittelt. Dadurch steht eine weitere Information über den Rotor- bzw. Flusswinkel zur Verfügung, wodurch die Zuverlässigkeit der Rotor- bzw. Flusswinkelermittlung erhöht wird.

1. Nach einer weiteren Ausgestaltung der Erfindung wird aus den ermittelten Werten für Sinus und Cosinus des doppelten Rotor- bzw. Flusswinkels der Rotor- bzw. Flusswinkel über bekannte mathematische Zusammenhänge berechnet und die Spannungsgleichungen von zwei zeitnah hintereinander auftretenden Umrichterschalterstellungen die Gestalt

$$u_{\alpha,I} = \frac{di_{\beta,I}}{d\tau} \cdot \frac{\ell_d - \ell_q}{2} \cdot \sin 2\gamma + \omega_m \cdot (\ell_d - \ell_q) \cdot i_{\beta,I} \cdot \cos 2\gamma - \omega_m \cdot \psi_M \cdot \sin(\gamma + \Delta\gamma)$$

$$u_{\beta,I} = \frac{di_{\beta,I}}{d\tau} \cdot \left[ \frac{\ell_d + \ell_q}{2} - \frac{\ell_d - \ell_q}{2} \cdot \cos 2\gamma \right] + r_s \cdot i_{\beta,I} + \omega_m \cdot (\ell_d - \ell_q) \cdot i_{\beta,I} \cdot \sin 2\gamma + \omega_m \cdot \psi_M \cdot \cos(\gamma + \Delta\gamma)$$

$$u_{\alpha,II} = \frac{di_{\beta,II}}{d\tau} \cdot \frac{\ell_d - \ell_q}{2} \cdot \sin 2\gamma + \omega_m \cdot (\ell_d - \ell_q) \cdot i_{\beta,II} \cdot \cos 2\gamma - \omega_m \cdot \psi_M \cdot \sin(\gamma + \Delta\gamma)$$

$$u_{\beta,II} = k \cdot u_{\beta,I} = \frac{di_{\beta,II}}{d\tau} \cdot \left[ \frac{\ell_d + \ell_q}{2} - \frac{\ell_d - \ell_q}{2} \cdot \cos 2\gamma \right] + r_s \cdot i_{\beta,II} + \omega_m \cdot (\ell_d - \ell_q) \cdot i_{\beta,II} \cdot \sin 2\gamma + \omega_m \cdot \psi_M \cdot \cos(\gamma + \Delta\gamma)$$

$$k \in \left[ -1,0 \right]$$

haben und die Subtraktion die Differenz-Messgleichung

$$u_{\alpha,I} - u_{\alpha,II} = \frac{\left[ di_{\beta,I} - di_{\beta,II} \right]}{d\tau} \cdot \frac{\ell_d - \ell_q}{2} \cdot \sin 2\gamma \tag{x}$$

$$(1-k) \cdot u_{\beta,I} = \frac{\left[ di_{\beta,I} - di_{\beta,II} \right]}{d\tau} \cdot \left[ \frac{\ell_d + \ell_q}{2} - \frac{\ell_d - \ell_q}{2} \cdot \cos 2\gamma \right] \tag{y}$$

lautet.

Damit ist eine einem Resolver nahe kommende Information über den Rotor- bzw. Flusswinkel mit guter Genauigkeit möglich.

Gemäß einer weiteren Ausgestaltung der Erfindung wird der berechnete Rotor- bzw. Flusswinkel zur rotor- bzw. feldorientierten Regelung der Maschine, vorzugsweise im vereinfachten Betrieb mit zwei stromführenden Phasen und einer stromlosen Phase, verwendet. Dadurch kann ein dynamisch hochwertiger Antrieb ohne mechanische Sensorik mit sehr hoher Zuverlässigkeit realisiert werden.

Nach einer weiteren Ausgestaltung der Erfindung wird bei Überschreiten einer Mindestdrehzahl die Rotor- bzw. Flusswinkelermittlung über ein EMK-Modell durchgeführt. Damit kann der Drehzahlbereich des Antriebs ohne nennenswerte zusätzliche Hardware bis zu höchsten Drehzahlen erweitert werden.

Die Durchführung der mechanisch sensorlosen Positionserfassung wird nachstehend dargelegt, wobei die folgenden Ausführungen ohne Beschränkung der Allgemeinheit auf einer dreiphasigen Drehstrommaschine basieren.

Die nachfolgende Erläuterung wird ohne Beschränkung der Allgemeinheit für einen von sechs im Allgemeinen zyklisch hintereinander folgenden Umrichter-Schaltzuständen durchgeführt. Dabei wird ein komplexes Koordinatensystem, nämlich eine reelle Achse a, korrespondierend mit der gesperrten, stromlosen Phase und eine imaginäre Achse β, definiert und die Maschine durch Raumzeigergleichungen beschrieben. Nach erfolgter Weiterschaltung vertauschen die Phasen entsprechend ihre Rollen, die α-Richtung wird wieder der neuen inaktiven Phase zugeordnet, somit bleiben die Gleichungen bis auf den zyklischen Wechsel der Phasenindizes gültig. Ausgangspunkt für die Durchführung der Messung ist ein Betriebspunkt der Maschine, gekennzeichnet durch eine Stromführung in nur zwei Phasen und einer dritten gesperrten Phase.

Anhand des Zustandes "Strom fließt bei Phase v hinein und bei Phase w heraus, Phase u ist gesperrt und stromlos" wird die Statorspannungsgleichung im statorfesten Koordinatensystem, wobei die reelle Achse in Richtung u ist. Bei Anlegen einer Spannung zwischen den Klemmen v und w und bei Verwendung eines Zwischenkreisumrichters bedeutet das: Brückenzweig u: Beide Schalter gesperrt / Brückenzweig v: oberer Schalter geschlossen, unterer offen / Brückenzweig w: oberer Schalter offen, unterer Schalter geschlossen.

Für die beiden Klemmenspannungskomponenten ergibt sich nach bekannten Regeln der Raumzeigerrechnung und der Zweiachsentheorie:

$$u_{\alpha,I} = \frac{di_{\beta,I}}{d\tau} \cdot \frac{\ell_d - \ell_q}{2} \cdot \sin 2\gamma + \omega_m \cdot (\ell_d - \ell_q) \cdot i_{\beta,I} \cdot \cos 2\gamma - \omega_m \cdot \psi_M \cdot \sin(\gamma + \Delta\gamma)$$

$$u_{\beta,I} = \frac{di_{\beta,I}}{d\tau} \cdot \left[ \frac{\ell_d + \ell_q}{2} - \frac{\ell_d - \ell_q}{2} \cdot \cos 2\gamma \right] + r_s \cdot i_{\beta,I} + \omega_m \cdot (\ell_d - \ell_q) \cdot i_{\beta,I} \cdot \sin 2\gamma + \omega_m \cdot \psi_M \cdot \cos(\gamma + \Delta\gamma)$$

Dabei wurde vorausgesetzt, dass die Induktivitäten in Längs- und Querrichtungen durch die zwei Induktivitätsparameter Id und Iq ausreichend genau beschrieben werden können. Die Längsrichtung d ist bei permanentmagnetisch oder dämpferlosen elektrisch erregten synchron laufenden Drehfeldmaschinen in Richtung des Permanentmagnet- oder Erregerflusszeigers, bei reinen Reluktanzmaschinen in Richtung der magnetisch gut leitenden Rotorachse, bei Asynchronmaschinen in Richtung der Achse minimaler Streuinduktivität, bei Synchronmaschinen mit Dämpfer in Richtung der Achse der minimalen subtransienten Induktivität.

$\Delta\gamma$ ist ein allfälliger Differenzwinkel zwischen der die induzierte Spannung hervorrufende Flussverkettung und der d-Achse. Dieser wird aufgrund der Subtraktion von zwei Spannungsgleichungen im erfindungsgemäßen Algorithmus eliminiert.

$\psi_M$ bedeutet bei permanentmagneterregten Synchronmaschinen den von Dauermagneten hervorgerufenen und mit der Statorwicklung verketteten Fluss, bei elektrisch erregten Synchronmaschinen ohne Dämpfer den von der Erregerwicklung hervorgerufenen und mit der Statorwicklung verketteten Fluss, bei Maschinen mit kurzgeschlossener Rotorwicklung bzw. kurzgeschlossenem Rotorkäfig, wie Asynchronmaschinen, elektrisch erregte dämpferbehaftete Synchronmaschinen, dämpferbehaftete Reluktanzmaschinen, die Flussverkettung dieser kurzgeschlossenen Wicklung, die sich während der Dauer der erfindungsgemäßen Messimpulsfolge in der Amplitude praktisch nicht ändert. Bei reinen Reluktanzmaschinen ist $\psi_M$ gleich Null.

Im Anschluss an diese Schaltersituation wird die Schalterstellung von (u/v/w= offen/1/0) auf (u/v/w=offen/0/1) oder ggf. (offen/0/0) oder ggf. (offen/1/1) geändert.

Es folgt folgende Spannungsgleichung in Komponenten

$$u_{\alpha,II} = \frac{di_{\beta,II}}{d\tau} \cdot \frac{\ell_d - \ell_q}{2} \cdot \sin 2\gamma + \omega_m \cdot (\ell_d - \ell_q) \cdot i_{\beta,II} \cdot \cos 2\gamma - \omega_m \cdot \psi_M \cdot \sin(\gamma + \Delta\gamma)$$

$$u_{\beta,II} = k \cdot u_{\beta,I} = \frac{di_{\beta,II}}{d\tau} \cdot \left[ \frac{\ell_d + \ell_q}{2} - \frac{\ell_d - \ell_q}{2} \cdot \cos 2\gamma \right] + r_s \cdot i_{\beta,II} + \omega_m \cdot (\ell_d - \ell_q) \cdot i_{\beta,II} \cdot \sin 2\gamma + \omega_m \cdot \psi_M \cdot \cos(\gamma + \Delta\gamma)$$

$$k \in [-1, 0]$$

Werden die beiden Spannungsgleichungssysteme subtrahiert, so werden die statorwiderstands- und drehzahlabhängigen Terme eliminiert und es verbleiben folgende Differenz-Messgleichungen:

$$u_{\alpha,I} - u_{\alpha,II} = \frac{\lfloor di_{\beta,I} - di_{\beta,II} \rfloor}{d\tau} \cdot \frac{\ell_d - \ell_q}{2} \cdot \sin 2\gamma \qquad\qquad (x)$$

$$(1 - k) \cdot u_{\beta,I} = \frac{\lfloor di_{\beta,I} - di_{\beta,II} \rfloor}{d\tau} \cdot \left[ \frac{\ell_d + \ell_q}{2} - \frac{\ell_d - \ell_q}{2} \cdot \cos 2\gamma \right] \qquad\qquad (y)$$

Durch die Bildung der Spannungsdifferenz fällt eine allfällige Nullkomponente in der Spannungsmessung heraus, da sie in beiden Gleichungen mit gleichem Vorzeichen zur Phasenspannung addiert wird und daher in der Differenz nicht wirksam wird. Damit wird es im Gegensatz zum Stand der Technik möglich, die Klemmenspannungen bezüglich eines beliebigen Bezugspotentials zu messen, also etwa gegen negatives Zwischenkreispotential, gegen einen künstlichen außerhalb der Maschine gebildeten Sternpunkt oder gegen ein Klemmpotential. Es ist keine Kenntnis der Phasenspannung gegen Maschinensternpunkt nötig.

Gleichung (x) zeigt, dass der Sinus des doppelten elektrischen Winkels aus der $\alpha$-Komponente der Spannungsdifferenz und der Stromanstiegsdifferenz in $\beta$-Richtung, dies entspricht im betrachteten Betriebsbereich bis auf einem Proportionalitätsfaktor der Stromanstiegsdifferenz entweder in Phase v oder in Phase w oder im Zwischenkreis, ermittelt werden kann. Voraussetzung für eine auswertbare Messung ist eine ausreichende Induktivitätsdifferenz in d- und q-Richtung.

Mit vereinfachten Mitteln kann aus Gleichung (x) eine Vorzeichenaussage über den Rotorlage- bzw. Flusswinkel $\gamma$ getroffen werden: Da die Stromanstiegsdifferenz ein eindeutiges Vorzeichen aufweist und ebenso das Vorzeichen der Induktivitätsdifferenz Id-Iq bekannt ist und sich im allgemeinen betriebspunktabhängig nicht ändert, kann aus dem Vorzeichen der $\alpha$-Komponente der Spannungsdifferenz auf das Vorzeichen des Winkels $2\gamma$ bzw. $\gamma$ geschlossen werden. Dies ist eine wertvolle Information, da für den betrachteten Leitzustand, nämlich Strom in Phase v hinein und aus Phase w heraus, bei γ=0, also im Moment des Vorzeichenwechsels, bereits mit guter Momentenausbeute auf den folgenden Schaltzustand gewechselt werden kann. Angemerkt sei, dass für kleine Induktivitätsdifferenzen Id-Iq der optimale Weiterschaltwinkel bei γ = 30 Grad liegt, welcher sich jedoch bei steigender Differenz Id-Iq in Richtung gamma=0 verschiebt. Dies bedeutet einen Betrieb mit im Mittel negativem d-Strom, welcher bei einer negativen Induktivitätsdifferenz Id-Iq<0 ein zusätzliches positives Reluktanzmoment erzeugt. Ist die Drehzahl über bekannte Methoden der Regelungstechnik aus der geschätzten Lage annähernd bekannt und ungleich Null, kann die Wartezeit bis zum Erreichen eines optimierten Weiterschaltwinkels aus dem Winkelnulldurchgang und der geschätzten Drehzahl berechnet werden. Diese vereinfachte Kommutierungsstrategie erfordert nur eine Spannungsdifferenz(-vorzeichen-)messung und keine Stromanstiegsmessung, weil deren Vorzeichen offensichtlich ist.

Aus Gleichung (y) kann der Cosinus des doppelten Rotorlage- bzw. Flusswinkels 2y bei Messung der Stromanstiegsdifferenz und bekannten Parametern Id und Iq sowie bekannter Zwischenkreisspannung berechnet werden. $u_\beta$ entspricht im betrachteten Betriebszustand bis auf einen konstanten Faktor der Zwischenkreisspannung.

Damit kann der doppelte Lagewinkel 2γ und in Folge auch der Winkel γ unter Verwendung von Gleichung (x) und/oder Gleichung (y) unter Anwendung bekannter Methoden der Trigonometrie ermittelt werden und damit eine rotor- bzw. feldorientierte Stromregelung ohne Rotorpositionsmessung realisiert werden.

Weiters ist es Aufgabe der Erfindung eine Schaltungsanordnung zur Durchführung des erfindungsgemäßen Verfahrens zu schaffen, die einerseits die Nachteile des Standes der Technik vermeidet und die anderseits einen einfachen Aufbau aufweist.

Die Aufgabe wird durch die Erfindung gelöst.

Die erfindungsgemäße Schaltungsanordnung ist dadurch gekennzeichnet, dass eine über einen Umrichter gespeiste Drehstrommaschine mit einer, vorzugsweise an den Anschlussklemmen angeordneten, Spannungsmesseinrichtung und gegebenenfalls einer, vorzugsweise im Zwischenkreis angeordneten, Strommesseinrichtung, vorgesehen ist, dass ein Rechner für die Verarbeitung der Messwerte aus der Spannungs- und Strommesseinrichtung, vorgesehen ist, wobei der Rechner in einer Messwertauswerteeinheit eine mit der Rotor- bzw. Flusslage korrespondierende Information ermittelt und dass die Messwertauswerteeinheit mit einer Steuerungseinheit verbunden ist, welche die Ansteuerung von Leistungsschaltern eines Leistungsteiles aufgrund der aus der Messwertauswerteeinheit stammenden Information vornimmt. Mit der Erfindung ist es erstmals möglich, eine mechanisch sensorlose Regelung einer Drehstrommaschine durchzuführen, die keine aufwendige elektrische Verbindung aus der Maschine zur Signalverarbeitung aufweist.

Nach einem weiteren Merkmal der Erfindung ist der Zwischenkreis über seine Anschlusspunkte mit einer vorgelagerten elektrischen Energieversorgung verbunden ist. Diese Energieversorgung kann ein Gleich- oder Wechselstromspannungsnetz mit Gleichrichtung oder aber auch eine Batterie sein. Es könnte sich auch um ein rückspeisefähige Energieversorgung handeln, wobei die entsprechenden Anlagenteile vorgesehen sind.

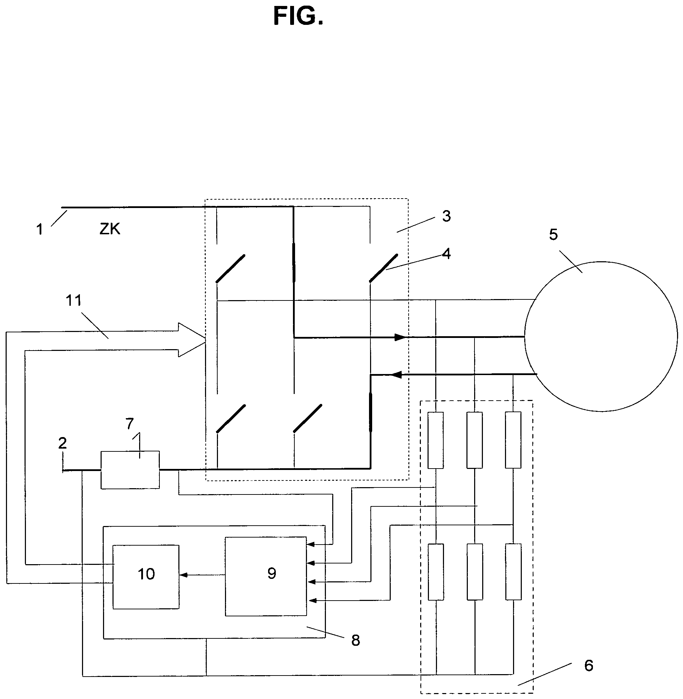

Die Erfindung wird an Hand eines in der Zeichnung dargestellten Ausführungsbeispiels näher erläutert.

Die Fig. zeigt eine Schaltungsanordnung zur Durchführung des eingangs beschriebenen Verfahrens.

Eine über einen Umrichter gespeiste dreiphasige Drehstrommaschine 5 wird mit einer mechanisch sensorlosen Regelung betrieben. An den Anschlussklemmen der Drehstrommaschine 5 ist eine Spannungsmesseinrichtung 6 vorgesehen. Ferner ist eine Strommesseinrichtung 7 vorgesehen, die im Zwischenkreis ZK angeordnet ist. Der Zwischenkreis ZK ist über seine Anschlusspunkte 1, 2 mit einer vorgelagerten elektrischen Energieversorgung verbunden. Ferner ist ein Rechner 8 für die Verarbeitung der Messwerte aus der Spannungs- 6 und Strommesseinrichtung 7, vorgesehen. Der Rechner 8 ermittelt in einer Messwertauswerteeinheit 9 eine mit der Rotor- bzw. Flusslage korrespondierende Information. Die Messwertauswerteeinheit 9 ist mit einer Steuerungseinheit 10 verbunden, welche die Ansteuerung - dargestellt durch den Pfeil 11 - von Leistungsschaltern 4 eines Leistungsteiles 3 aufgrund der aus der Messwertauswerteeinheit 9 stammenden Information vornimmt.

**Patentansprüche**

**1.** Verfahren zur mechanisch sensorlosen Regelung einer Drehstrommaschine, vorzugsweise einer dreiphasigen, Drehstrommaschine, **dadurch gekennzeichnet, dass** zumindest während der Zeit der zur Rotorpositionsauswertung herangezogenen Umrichterschalterstellungen die Stromführung in zwei Phasen erfolgt und mindestens eine Phase stromlos ist und eine Information bzw. Informationen über den Rotor- bzw. Flusswinkel aus der durch Subtraktion von zwei während unterschiedlicher zeitnah hintereinander auftretenden Umrichterschalterstellungen gültigen Spannungsgleichungen erfolgt, wobei die beiden unterschiedlichen Umrichterschalterstellungen dieselbe stromlose Phase aufweisen und die Spannungsgleichungen von zwei zeitnah hintereinander auftretenden Umrichterschalterstellungen die Gestalt

$$u_{\alpha,I} = \frac{di_{\beta,I}}{d\tau} \cdot \frac{\ell_d - \ell_q}{2} \cdot \sin 2\gamma + \omega_m \cdot (\ell_d - \ell_q) \cdot i_{\beta,I} \cdot \cos 2\gamma - \omega_m \cdot \psi_M \cdot \sin(\gamma + \Delta\gamma)$$

$$u_{\beta,I} = \frac{di_{\beta,I}}{d\tau} \cdot \left[ \frac{\ell_d + \ell_q}{2} - \frac{\ell_d - \ell_q}{2} \cdot \cos 2\gamma \right] + r_s \cdot i_{\beta,I} + \omega_m \cdot (\ell_d - \ell_q) \cdot i_{\beta,I} \cdot \sin 2\gamma + \omega_m \cdot \psi_M \cdot \cos(\gamma + \Delta\gamma)$$

$$u_{\alpha,II} = \frac{di_{\beta,II}}{d\tau} \cdot \frac{\ell_d - \ell_q}{2} \cdot \sin 2\gamma + \omega_m \cdot (\ell_d - \ell_q) \cdot i_{\beta,II} \cdot \cos 2\gamma - \omega_m \cdot \psi_M \cdot \sin(\gamma + \Delta\gamma)$$

$$u_{\beta,II} = k \cdot u_{\beta,I} = \frac{di_{\beta,II}}{d\tau} \cdot \left[ \frac{\ell_d + \ell_q}{2} - \frac{\ell_d - \ell_q}{2} \cdot \cos 2\gamma \right] + r_s \cdot i_{\beta,II} + \omega_m \cdot (\ell_d - \ell_q) \cdot i_{\beta,II} \cdot \sin 2\gamma + \omega_m \cdot \psi_M \cdot \cos(\gamma + \Delta\gamma)$$

$$k \in [-1,0]$$

haben und die Subtraktion die Differenz-Messgleichung

$$u_{\alpha,I} - u_{\alpha,II} = \frac{[di_{\beta,I} - di_{\beta,II}]}{d\tau} \cdot \frac{\ell_d - \ell_q}{2} \cdot \sin 2\gamma \qquad\qquad (x)$$

$$(1-k) \cdot u_{\beta,I} = \frac{[di_{\beta,I} - di_{\beta,II}]}{d\tau} \cdot \left[ \frac{\ell_d + \ell_q}{2} - \frac{\ell_d - \ell_q}{2} \cdot \cos 2\gamma \right] \qquad\qquad (y)$$

lautet.

2. Verfahren nach Anspruch 1, **dadurch gekennzeichnet, dass** der Sinus des doppelten Rotor- bzw. Flusswinkels aus der Differenz der auf das gleiche beliebig wählbare Bezugspotential bezogenen Spannungen an der stromlosen Phase während der beiden unterschiedlichen Umrichterschalterstellungen, dividiert durch die Differenz der beiden während der unterschiedlichen Umrichterschalterstellungen auftretenden Stromanstiege in den leitenden Phasen und weiter dividiert durch die halbe Induktivitätsdifferenz in Direkt- und Querachse ermittelt wird.

3. Verfahren nach Anspruch 2, **dadurch gekennzeichnet, dass** aus dem gemäß Anspruch 2 ermittelten Sinus des doppelten Rotor- bzw. Flusswinkels der Winkel des Sollstromraumzeigers, vorzugsweise eingeschränkt auf die beim durch zwei stromführende Motorphasen und eine stromlose Phase gekennzeichneten vereinfachten Betrieb möglichen Stromraumzeigerrichtungen, berechnet wird und die Spannungsgleichungen von zwei zeitnah hintereinander auftretenden Umrichterschalterstellungen die Gestalt

$$u_{\alpha,I} = \frac{di_{\beta,I}}{d\tau} \cdot \frac{\ell_d - \ell_q}{2} \cdot \sin 2\gamma + \omega_m \cdot (\ell_d - \ell_q) \cdot i_{\beta,I} \cdot \cos 2\gamma - \omega_m \cdot \psi_M \cdot \sin(\gamma + \Delta\gamma)$$

$$u_{\beta,I} = \frac{di_{\beta,I}}{d\tau} \cdot \left[ \frac{\ell_d + \ell_q}{2} - \frac{\ell_d - \ell_q}{2} \cdot \cos 2\gamma \right] + r_s \cdot i_{\beta,I} + \omega_m \cdot (\ell_d - \ell_q) \cdot i_{\beta,I} \cdot \sin 2\gamma + \omega_m \cdot \psi_M \cdot \cos(\gamma + \Delta\gamma)$$

$$u_{\alpha,II} = \frac{di_{\beta,II}}{d\tau} \cdot \frac{\ell_d - \ell_q}{2} \cdot \sin 2\gamma + \omega_m \cdot (\ell_d - \ell_q) \cdot i_{\beta,II} \cdot \cos 2\gamma - \omega_m \cdot \psi_M \cdot \sin(\gamma + \Delta\gamma)$$

$$u_{\beta,II} = k \cdot u_{\beta,I} = \frac{di_{\beta,II}}{d\tau} \cdot \left[ \frac{\ell_d + \ell_q}{2} - \frac{\ell_d - \ell_q}{2} \cdot \cos 2\gamma \right] + r_s \cdot i_{\beta,II} + \omega_m \cdot (\ell_d - \ell_q) \cdot i_{\beta,II} \cdot \sin 2\gamma + \omega_m \cdot \psi_M \cdot \cos(\gamma + \Delta\gamma)$$

$$k \in \left[ -1, 0 \right]$$

haben und die Subtraktion die Differenz-Messgleichung

$$u_{\alpha,I} - u_{\alpha,II} = \frac{\left[ di_{\beta,I} - di_{\beta,II} \right]}{d\tau} \cdot \frac{\ell_d - \ell_q}{2} \cdot \sin 2\gamma \qquad \text{(x)}$$

$$(1-k) \cdot u_{\beta,I} = \frac{\left[ di_{\beta,I} - di_{\beta,II} \right]}{d\tau} \cdot \left[ \frac{\ell_d + \ell_q}{2} - \frac{\ell_d - \ell_q}{2} \cdot \cos 2\gamma \right] \qquad \text{(y)}$$

lautet.

4. Verfahren nach einem der Ansprüche 2 oder 3, **dadurch gekennzeichnet, dass** das Vorzeichen des gemäß Anspruch 2 ermittelten Sinus des doppelten Rotor- bzw. Flusswinkels aus dem Vorzeichen der Differenz der Spannungen an der stromlosen Phase während der beiden unterschiedlichen Umrichterschalterstellungen bei bekanntem Vorzeichen der Induktivitätsdifferenz in Direkt- und Querachse ermittelt wird.

5. Verfahren nach mindestens einem der Ansprüche 2 bis 4, **dadurch gekennzeichnet, dass** der Vorzeichenwechsel des gemäß Anspruch 2 ermittelten Sinus des doppelten Rotor- bzw. Flusswinkels, welcher mit dem Nulldurchgang des Rotor- bzw. Flusswinkels in Bezug auf die Achse der stromlosen Phase korrespondiert, als Kriterium zum Weiterschalten des Stromraumzeigers im Sinne einer hohen Drehmomentausbeute, verwendet wird.

6. Verfahren nach mindestens einem der Ansprüche 2 bis 5, **dadurch gekennzeichnet, dass** das auf dem Vorzeichenwechsel des gemäß Anspruch 2 ermittelten Sinus des doppelten Rotor- bzw. Flusswinkels basierende Kriterium zum Weiterschalten des Stromraumzeigers zum Zwecke einer möglichst hohen Drehmomentausbeute um eine monoton mit dem Kehrwert einer geschätzten Rotor- bzw. Flussdrehzahl steigende Weiterschalt-Zeitverzögerung gegenüber dem Zeitpunkt des genannten Vorzeichenwechsels verbessert wird.

7. Verfahren nach mindestens einem der Ansprüche 1 bis 6, **dadurch gekennzeichnet, dass** der Cosinus des doppelten Rotor- bzw. Flusswinkels aus der Differenz der verketteten Spannungen der stromführenden Phasen während der beiden unterschiedlichen Umrichterschalterstellungen, dividiert durch die Differenz der beiden während der unterschiedlichen Umrichterschalterstellungen auftretenden Stromanstiege in den leitenden Phasen sowie anschließender Subtraktion des arithmetischen Mittels aus Längs- und Querinduktivität und danach anschließender Division durch die halbe Induktivitätsdifferenz in Quer- und Längsachse ermittelt wird.

8. Verfahren nach Anspruch 7, **dadurch gekennzeichnet, dass** aus den ermittelten Werten für Sinus, ermittelt gemäß Anspruch 2 und Cosinus, ermittelt gemäß Anspruch 7, des doppelten Rotor- bzw. Flusswinkels der Rotor- bzw. Flusswinkel über bekannte mathematische Zusammenhänge berechnet wird und die Spannungsgleichungen von zwei zeitnah hintereinander auftretenden Umrichterschalterstellungen die Gestalt

$$u_{\alpha,I} = \frac{di_{\beta,I}}{d\tau} \cdot \frac{\ell_d - \ell_q}{2} \cdot \sin 2\gamma + \omega_m \cdot (\ell_d - \ell_q) \cdot i_{\beta,I} \cdot \cos 2\gamma - \omega_m \cdot \psi_M \cdot \sin(\gamma + \Delta\gamma)$$

$$u_{\beta,I} = \frac{di_{\beta,I}}{d\tau} \cdot \left[ \frac{\ell_d + \ell_q}{2} - \frac{\ell_d - \ell_q}{2} \cdot \cos 2\gamma \right] + r_s \cdot i_{\beta,I} + \omega_m \cdot (\ell_d - \ell_q) \cdot i_{\beta,I} \cdot \sin 2\gamma + \omega_m \cdot \psi_M \cdot \cos(\gamma + \Delta\gamma)$$

$$u_{\alpha,II} = \frac{di_{\beta,II}}{d\tau} \cdot \frac{\ell_d - \ell_q}{2} \cdot \sin 2\gamma + \omega_m \cdot (\ell_d - \ell_q) \cdot i_{\beta,II} \cdot \cos 2\gamma - \omega_m \cdot \psi_M \cdot \sin(\gamma + \Delta\gamma)$$

$$u_{\beta,II} = k \cdot u_{\beta,I} = \frac{di_{\beta,II}}{d\tau} \cdot \left[ \frac{\ell_d + \ell_q}{2} - \frac{\ell_d - \ell_q}{2} \cdot \cos 2\gamma \right] + r_s \cdot i_{\beta,II} + \omega_m \cdot (\ell_d - \ell_q) \cdot i_{\beta,II} \cdot \sin 2\gamma + \omega_m \cdot \psi_M \cdot \cos(\gamma + \Delta\gamma)$$

$$k \in \left[ -1,0 \right]$$

haben und die Subtraktion die Differenz-Messgleichung

$$u_{\alpha,I} - u_{\alpha,II} = \frac{\left[ di_{\beta,I} - di_{\beta,II} \right]}{d\tau} \cdot \frac{\ell_d - \ell_q}{2} \cdot \sin 2\gamma \qquad (x)$$

$$(1-k) \cdot u_{\beta,I} = \frac{\left[ di_{\beta,I} - di_{\beta,II} \right]}{d\tau} \cdot \left[ \frac{\ell_d + \ell_q}{2} - \frac{\ell_d - \ell_q}{2} \cdot \cos 2\gamma \right] \qquad (y)$$

lautet.

9. Verfahren nach mindestens einem der Ansprüche 1 bis 8, **dadurch gekennzeichnet, dass** der berechnete Rotor- bzw. Flusswinkel zur rotor- bzw. feldorientierten Regelung der Maschine, vorzugsweise im vereinfachten Betrieb mit zwei stromführenden Phasen und einer stromlosen Phase, verwendet wird.

10. Verfahren nach mindestens einem der Ansprüche 1 bis 9, **dadurch gekennzeichnet, dass** bei Überschreiten einer Mindestdrehzahl die Rotor- bzw. Flusswinkelermittlung über ein EMK-Modell erfolgt.

11. Schaltungsanordnung zur Durchführung des Verfahrens nach mindestens einem der Ansprüche 1 bis 10, **dadurch gekennzeichnet, dass** eine über einen Umrichter gespeiste Drehstrommaschine (5) mit einer, vorzugsweise an den Anschlussklemmen angeordneten, Spannungsmesseinrichtung (6) und gegebenenfalls einer, vorzugsweise im Zwischenkreis (ZK) angeordneten, Strommesseinrichtung (7), vorgesehen ist, dass ein Rechner (8) für die Verarbeitung der Messwerte aus der Spannungs- (6) und Strommesseinrichtung (7), vorgesehen ist, wobei der Rechner (8) in einer Messwertauswerteeinheit (9) eine mit der Rotor- bzw. Flusslage korrespondierende Information ermittelt und dass die Messwertauswerteeinheit (9) mit einer Steuerungseinheit (10) verbunden ist, welche die Ansteuerung (11) von Leistungsschaltern (4) eines Leistungsteiles (3) aufgrund der aus der Messwertauswerteeinheit (9) stammenden Information vornimmt.

12. Schaltungsanordnung nach Anspruch 11, **dadurch gekennzeichnet, dass** der Zwischenkreis (ZK) über seine Anschlusspunkte (1, 2) mit einer vorgelagerten elektrischen Energieversorgung verbunden ist.

**Claims**

1. Method for mechanical sensorless control of a polyphase machine, preferably a three-phase machine, **characterized in that**, at least during the time of the inverter switch positions used for rotor position evaluation, the current is conducted in two phases and at least one phase is currentless, and information about the rotor or flow angle, respectively, is obtained by the substraction of the voltage equations valid during two different inverter switch positions occuring in close succession, the two different inverter switch positions having the same currentless phase and the voltage equations of two inverter switch positions that occur in close succession other having the form

$$u_{\alpha,I} = \frac{di_{\beta,I}}{d\tau} \cdot \frac{\ell_d - \ell_q}{2} \cdot \sin 2\gamma + \omega_m \cdot (\ell_d - \ell_q) \cdot i_{\beta,I} \cdot \cos 2\gamma - \omega_m \cdot \psi_M \cdot \sin(\gamma + \Delta\gamma)$$

$$u_{\beta,I} = \frac{di_{\beta,I}}{d\tau} \cdot \left[ \frac{\ell_d + \ell_q}{2} - \frac{\ell_d - \ell_q}{2} \cdot \cos 2\gamma \right] + r_s \cdot i_{\beta,I} + \omega_m \cdot (\ell_d - \ell_q) \cdot i_{\beta,I} \cdot \sin 2\gamma + \omega_m \cdot \psi_M \cdot \cos(\gamma + \Delta\gamma)$$

$$u_{\alpha,II} = \frac{di_{\beta,II}}{d\tau} \cdot \frac{\ell_d - \ell_q}{2} \cdot \sin 2\gamma + \omega_m \cdot (\ell_d - \ell_q) \cdot i_{\beta,II} \cdot \cos 2\gamma - \omega_m \cdot \psi_M \cdot \sin(\gamma + \Delta\gamma)$$

$$u_{\beta,II} = k \cdot u_{\beta,I} = \frac{di_{\beta,II}}{d\tau} \cdot \left[ \frac{\ell_d + \ell_q}{2} - \frac{\ell_d - \ell_q}{2} \cdot \cos 2\gamma \right] + r_s \cdot i_{\beta,II} + \omega_m \cdot (\ell_d - \ell_q) \cdot i_{\beta,II} \cdot \sin 2\gamma + \omega_m \cdot \psi_M \cdot \cos(\gamma + \Delta\gamma)$$

$$k \in \left[ -1, 0 \right]$$

and the subtraction being the difference measurement equation.

$$u_{\alpha,I} - u_{\alpha,II} = \frac{\left[ di_{\beta,I} - di_{\beta,II} \right]}{d\tau} \cdot \frac{\ell_d - \ell_q}{2} \cdot \sin 2\gamma \tag{x}$$

$$(1-k) \cdot u_{\beta,I} = \frac{\left[ di_{\beta,I} - di_{\beta,II} \right]}{d\tau} \cdot \left[ \frac{\ell_d + \ell_q}{2} - \frac{\ell_d - \ell_q}{2} \cdot \cos 2\gamma \right] \tag{y}$$

2. Method according to Claim 1, **characterized in that** the sine of the double rotor or flow angle, respectively, is determined from the difference between the voltages in relation to the same arbitrarily selectable reference potential at the currentless phase during the two different inverter switch positions, divided by the difference between the two current slope-ups occurring in the conducting phases during the different inverter switch positions and further divided by one-half the inductance difference in the direct and transverse axes.

3. Method according to Claim 2, **characterized in that** the angle of the target current space phasor, preferably restricted to the current space phasor directions possible during simplified operation **characterized by** two current-carrying motor phases and one currentless phase, is calculated from the sine of the double rotor or flow angle, respectively, determined according to Claim 2, with the voltage equations of two inverter switch positions that occur in close succession having the form

$$u_{\alpha,I} = \frac{di_{\beta,I}}{d\tau} \cdot \frac{\ell_d - \ell_q}{2} \cdot \sin 2\gamma + \omega_m \cdot (\ell_d - \ell_q) \cdot i_{\beta,I} \cdot \cos 2\gamma - \omega_m \cdot \psi_M \cdot \sin(\gamma + \Delta\gamma)$$

$$u_{\beta,I} = \frac{di_{\beta,I}}{d\tau} \cdot \left[ \frac{\ell_d + \ell_q}{2} - \frac{\ell_d - \ell_q}{2} \cdot \cos 2\gamma \right] + r_s \cdot i_{\beta,I} + \omega_m \cdot (\ell_d - \ell_q) \cdot i_{\beta,I} \cdot \sin 2\gamma + \omega_m \cdot \psi_M \cdot \cos(\gamma + \Delta\gamma)$$

$$u_{\alpha,II} = \frac{di_{\beta,II}}{d\tau} \cdot \frac{\ell_d - \ell_q}{2} \cdot \sin 2\gamma + \omega_m \cdot (\ell_d - \ell_q) \cdot i_{\beta,II} \cdot \cos 2\gamma - \omega_m \cdot \psi_M \cdot \sin(\gamma + \Delta\gamma)$$

$$u_{\beta,II} = k \cdot u_{\beta,I} = \frac{di_{\beta,II}}{d\tau} \cdot \left[ \frac{\ell_d + \ell_q}{2} - \frac{\ell_d - \ell_q}{2} \cdot \cos 2\gamma \right] + r_s \cdot i_{\beta,II} + \omega_m \cdot (\ell_d - \ell_q) \cdot i_{\beta,II} \cdot \sin 2\gamma + \omega_m \cdot \psi_M \cdot \cos(\gamma + \Delta\gamma)$$

$$k \in \left[ -1, 0 \right]$$

and the subtraction being the difference measurement equation.

$$u_{\alpha,I} - u_{\alpha,II} = \frac{\left[di_{\beta,I} - di_{\beta,II}\right]}{d\tau} \cdot \frac{\ell_d - \ell_q}{2} \cdot \sin 2\gamma$$

(x)

$$(1-k) \cdot u_{\beta,I} = \frac{\left[di_{\beta,I} - di_{\beta,II}\right]}{d\tau} \cdot \left[\frac{\ell_d + \ell_q}{2} - \frac{\ell_d - \ell_q}{2} \cdot \cos 2\gamma\right]$$

(y)

4. Method according to one of Claims 2 or 3, **characterized in that** the sign of the sine of the double rotor or flow angle, respectively, determined according to Claim 2 is determined from the sign of the difference of the voltages at the currentless phase during the two different inverter switch positions with known sign of the inductance difference in the direct and transverse axes.

5. Method according to at least one of Claims 2 to 4, **characterized in that** the sign change of the sine of the double rotor or flow angle, respectively, determined according to Claim 2, which corresponds to the zero crossing of the rotor or flow angle, respectively, in relation to the axis of the currentless phase, is used as a criterion for stepping the current space phasor in the interest of high torque yield.

6. Method according to at least one of Claims 2 to 5, **characterized in that** the criterion of the double rotor or flow angle, respectively, for stepping the current space phasor based on the sign change of the sine determined according to Claim 2 is improved, for the purpose of maximum torque yield, by a stepping time delay that increases monotonously with the reciprocal of an estimated rotor or flow speed in relation to the time of said sign change.

7. Method according to at least one of Claims 1 to 6, **characterized in that** the cosine of the double rotor or flow angle, respectively, is determined from the difference of the interlinked voltages of the current-carrying phases during the two different inverter switch positions, divided by the difference of the two current slope-ups occurring during the different inverter switch positions in the conducting phases, and subsequent subtraction of the arithmetic mean from longitudinal and transverse inductance and then subsequent division by one-half the inductance difference in the transverse and longitudinal axes.

8. Method according to Claim 7, **characterized in that** the rotor or flow angle, respectively, is calculated from the determined values for sine, determined according to Claim 2, and cosine, determined according to Claim 7, of the double rotor or flow angle, respectively, via established mathematical correlations, with the voltage equations of two inverter switch positions that occur in close succession having the form

$$u_{\alpha,I} = \frac{di_{\beta,I}}{d\tau} \cdot \frac{\ell_d - \ell_q}{2} \cdot \sin 2\gamma + \omega_m \cdot (\ell_d - \ell_q) \cdot i_{\beta,I} \cdot \cos 2\gamma - \omega_m \cdot \psi_M \cdot \sin(\gamma + \Delta\gamma)$$

$$u_{\beta,I} = \frac{di_{\beta,I}}{d\tau} \cdot \left[\frac{\ell_d + \ell_q}{2} - \frac{\ell_d - \ell_q}{2} \cdot \cos 2\gamma\right] + r_s \cdot i_{\beta,I} + \omega_m \cdot (\ell_d - \ell_q) \cdot i_{\beta,I} \cdot \sin 2\gamma + \omega_m \cdot \psi_M \cdot \cos(\gamma + \Delta\gamma)$$

$$u_{\alpha,II} = \frac{di_{\beta,II}}{d\tau} \cdot \frac{\ell_d - \ell_q}{2} \cdot \sin 2\gamma + \omega_m \cdot (\ell_d - \ell_q) \cdot i_{\beta,II} \cdot \cos 2\gamma - \omega_m \cdot \psi_M \cdot \sin(\gamma + \Delta\gamma)$$

$$u_{\beta,II} = k \cdot u_{\beta,I} = \frac{di_{\beta,II}}{d\tau} \cdot \left[\frac{\ell_d + \ell_q}{2} - \frac{\ell_d - \ell_q}{2} \cdot \cos 2\gamma\right] + r_s \cdot i_{\beta,II} + \omega_m \cdot (\ell_d - \ell_q) \cdot i_{\beta,II} \cdot \sin 2\gamma + \omega_m \cdot \psi_M \cdot \cos(\gamma + \Delta\gamma)$$

$$k \in \left[-1, 0\right]$$

and the subtraction being the difference measurement equation.

$$u_{\alpha,I} - u_{\alpha,II} = \frac{\left[di_{\beta,I} - di_{\beta,II}\right]}{d\tau} \cdot \frac{\ell_d - \ell_q}{2} \cdot \sin 2\gamma \qquad\qquad\qquad (x)$$

$$(1-k)\cdot u_{\beta,I} = \frac{\left[di_{\beta,I} - di_{\beta,II}\right]}{d\tau} \cdot \left[\frac{\ell_d + \ell_q}{2} - \frac{\ell_d - \ell_q}{2} \cdot \cos 2\gamma\right] \qquad\qquad (y)$$

9. Method according to at least one of Claims 1 to 8, **characterized in that** the calculated rotor or flow angle, respectively, is used for rotor- or field-oriented, respectively, control of the machine, preferably in simplified operation with two current-carrying phases and one currentless phase.

10. Method according to at least one of Claims 1 to 9, **characterized in that** upon exceedance of a minimum speed the rotor or flow angle, respectively, is determined via an EMF model.

11. Circuit arrangement for carrying out the method according to at least one of Claims 1 to 10, **characterized in that** a polyphase machine (5) fed via an inverter comprises a voltage measurement device (6), preferably provided at the terminals, and optionally a current measurement device (7), preferably provided in the intermediate circuit (IMC), and a data processor (8) is provided for processing the measured values from the voltage measurement device (6) and the current measurement device (7), said processor (8) determining in a measurement evaluation unit (9) information corresponding to the rotor or flow position, respectively, and said measurement evaluation unit (9) being connected to a control unit (10) that provides control (11) of circuit breakers (4) of a power section (3) on the basis of the information originating from the measurement evaluation unit (9).

12. Circuit arrangement according to Claim 11, **characterized in that** the intermediate circuit (IMC) is connected via its connection points (1, 2) to an upstream electrical power supply.

**Revendications**

1. Procédure de réglage mécanique sans capteur d'une machine électrique rotative, de préférence triphasée, **caractérisée par le fait que** la conduction de courant est effectuée en deux phase, au moins le temps des établissements des commutateurs utilisés pour l'évaluation de la position du rotor et qu'au moins une phase est hors tension et une ou plusieurs informations sur l'angle du rotor ou de la circulation découlent de la soustraction de deux égalisations de tension valides lors de deux établissements différents des commutateurs, effectués successivement, tandis que les deux établissements différents de commutateurs présentent la même phase hors tension et les égalisations de tension ont la forme de deux établissements différents de commutateurs successifs

$$u_{\alpha,I} = \frac{di_{\beta,I}}{d\tau}\cdot\frac{\ell_d - \ell_q}{2}\cdot\sin 2\gamma + \omega_m\cdot(\ell_d - \ell_q)\cdot i_{\beta,I}\cdot\cos 2\gamma - \omega_m\cdot\psi_M\cdot\sin(\gamma+\Delta\gamma)$$

$$u_{\beta,I} = \frac{di_{\beta,I}}{d\tau}\cdot\left[\frac{\ell_d + \ell_q}{2} - \frac{\ell_d - \ell_q}{2}\cdot\cos 2\gamma\right] + r_s\cdot i_{\beta,I} + \omega_m\cdot(\ell_d - \ell_q)\cdot i_{\beta,I}\cdot\sin 2\gamma + \omega_m\cdot\psi_M\cdot\cos(\gamma+\Delta\gamma)$$

$$u_{\alpha,II} = \frac{di_{\beta,II}}{d\tau}\cdot\frac{\ell_d - \ell_q}{2}\cdot\sin 2\gamma + \omega_m\cdot(\ell_d - \ell_q)\cdot i_{\beta,II}\cdot\cos 2\gamma - \omega_m\cdot\psi_M\cdot\sin(\gamma+\Delta\gamma)$$

$$u_{\beta,II} = k\cdot u_{\beta,I} = \frac{di_{\beta,II}}{d\tau}\cdot\left[\frac{\ell_d + \ell_q}{2} - \frac{\ell_d - \ell_q}{2}\cdot\cos 2\gamma\right] + r_s\cdot i_{\beta,II} + \omega_m\cdot(\ell_d - \ell_q)\cdot i_{\beta,II}\cdot\sin 2\gamma + \omega_m\cdot\psi_M\cdot\cos(\gamma+\Delta\gamma)$$

$$k \in \left[-1,0\right]$$

et la soustraction indique l'égalisation de la mesure de différence.

$$u_{\alpha,I} - u_{\alpha,II} = \frac{\lfloor di_{\beta,I} - di_{\beta,II} \rfloor}{d\tau} \cdot \frac{\ell_d - \ell_q}{2} \cdot \sin 2\gamma \qquad (x)$$

$$(1-k) \cdot u_{\beta,I} = \frac{\lfloor di_{\beta,I} - di_{\beta,II} \rfloor}{d\tau} \cdot \left[ \frac{\ell_d + \ell_q}{2} - \frac{\ell_d - \ell_q}{2} \cdot \cos 2\gamma \right] \qquad (y)$$

**2.** Procédure selon l'exigence 1, **caractérisée par le fait que** le sinus du double angle du rotor ou de la circulation est calculé à partir de la différence entre les tensions de la phase hors tension sur la base du même potentiel de référence pouvant être sélectionné lors des deux établissements différents de commutateurs, divisée par la différence des deux accroissements de courant lors des établissements différents de commutateurs au cours des phases conductrices et à nouveau divisée par la moitié de la différence d'inductance en axe direct et transversal.

**3.** Procédure selon l'exigence 2, **caractérisée par le fait que** l'angle de l'indicateur de courant de consigne, de préférence limité aux directions de vecteurs d'espace de courant au fonctionnement simplifié **caractérisé par** deux phases de moteur conductrices et une phase hors tension est calculé à partir du sinus du double angle du rotor ou de la circulation calculé selon l'exigence 2 et les égalisations de tension ont la forme de deux établissements différents de commutateurs successifs

$$u_{\alpha,I} = \frac{di_{\beta,I}}{d\tau} \cdot \frac{\ell_d - \ell_q}{2} \cdot \sin 2\gamma + \omega_m \cdot (\ell_d - \ell_q) \cdot i_{\beta,I} \cdot \cos 2\gamma - \omega_m \cdot \psi_M \cdot \sin(\gamma + \Delta\gamma)$$

$$u_{\beta,I} = \frac{di_{\beta,I}}{d\tau} \cdot \left[ \frac{\ell_d + \ell_q}{2} - \frac{\ell_d - \ell_q}{2} \cdot \cos 2\gamma \right] + r_s \cdot i_{\beta,I} + \omega_m \cdot (\ell_d - \ell_q) \cdot i_{\beta,I} \cdot \sin 2\gamma + \omega_m \cdot \psi_M \cdot \cos(\gamma + \Delta\gamma)$$

$$u_{\alpha,II} = \frac{di_{\beta,II}}{d\tau} \cdot \frac{\ell_d - \ell_q}{2} \cdot \sin 2\gamma + \omega_m \cdot (\ell_d - \ell_q) \cdot i_{\beta,II} \cdot \cos 2\gamma - \omega_m \cdot \psi_M \cdot \sin(\gamma + \Delta\gamma)$$

$$u_{\beta,II} = k \cdot u_{\beta,I} = \frac{di_{\beta,II}}{d\tau} \cdot \left[ \frac{\ell_d + \ell_q}{2} - \frac{\ell_d - \ell_q}{2} \cdot \cos 2\gamma \right] + r_s \cdot i_{\beta,II} + \omega_m \cdot (\ell_d - \ell_q) \cdot i_{\beta,II} \cdot \sin 2\gamma + \omega_m \cdot \psi_M \cdot \cos(\gamma + \Delta\gamma)$$

$$k \in \left[ -1, 0 \right]$$

et la soustraction indique l'égalisation de la mesure de différence.

$$u_{\alpha,I} - u_{\alpha,II} = \frac{\lfloor di_{\beta,I} - di_{\beta,II} \rfloor}{d\tau} \cdot \frac{\ell_d - \ell_q}{2} \cdot \sin 2\gamma \qquad (x)$$

$$(1-k) \cdot u_{\beta,I} = \frac{\lfloor di_{\beta,I} - di_{\beta,II} \rfloor}{d\tau} \cdot \left[ \frac{\ell_d + \ell_q}{2} - \frac{\ell_d - \ell_q}{2} \cdot \cos 2\gamma \right] \qquad (y)$$

**4.** Procédure selon l'une des exigences 2 ou 3, **caractérisées par le fait que** le signe algébrique du sinus est calculé selon l'exigence 2 du double angle de rotor ou de circulation à partir du signe algébrique de la différence des tensions par rapport à la phase hors tension, tandis que les deux établissements différents de commutateurs sont calculés avec le signe algébrique connu de la différence d'inductance en axe direct et transversal.

**5.** Procédure selon au moins une des exigences 2 à 4, **caractérisée par le fait que** le changement de signe algébrique du sinus calculé selon l'exigence 2 du double angle du rotor ou de la circulation, qui correspond au passage par zéro de l'angle du rotor ou de la circulation en ce qui concerne les axes de la phase hors tension, est utilisé comme critère pour le transfert du vecteur d'espace de courant au sens d'un important rendement de couple de rotation.

**6.** Procédure selon au moins une des exigences 2 à 5, **caractérisée par le fait que** le sinus du double angle de rotor ou de circulation calculé selon l'exigence 2 et basé sur le changement de signe algébrique, reposant sur le critère de transfert du vecteur d'espace de courant pour un rendement de couple de rotation aussi élevé que possible et une réciproque monotone du retard de transfert de la valeur estimée de vitesse de rotation du rotor ou du couple augmentant par rapport au moment dudit changement de signe algébrique est amélioré.

**7.** Procédure selon au moins une des exigences 1 à 6, **caractérisée par le fait que** le cosinus du double angle du rotor ou de la circulation est calculé à partir de la différence des tensions des phases conductrices lors des deux établissements différents de commutateurs, divisée par la différence des deux augmentations de courant survenant lors des deux établissements différents de commutateurs dans les phases conductrices, ainsi que de la soustraction suivante de la moyenne arithmétique de l'inductance longitudinale et transversale, puis de la division par la moitié de la différence d'inductance en axe direct et transversal.

**8.** Procédure selon l'exigence 7, **caractérisée par le fait qu'**à partir des valeurs calculées pour le sinus, déterminées selon l'exigence 2 et le cosinus, déterminé selon l'exigence 7, le double angle du rotor ou de circulation du rotor ou de circulation est calculé avec les liens mathématiques connus et les égalisations de tension ont la forme de deux établissements différents de commutateurs successifs

$$u_{\alpha,I} = \frac{di_{\beta,I}}{d\tau} \cdot \frac{\ell_d - \ell_q}{2} \cdot \sin 2\gamma + \omega_m \cdot (\ell_d - \ell_q) \cdot i_{\beta,I} \cdot \cos 2\gamma - \omega_m \cdot \psi_M \cdot \sin(\gamma + \Delta\gamma)$$

$$u_{\beta,I} = \frac{di_{\beta,I}}{d\tau} \cdot \left[ \frac{\ell_d + \ell_q}{2} - \frac{\ell_d - \ell_q}{2} \cdot \cos 2\gamma \right] + r_s \cdot i_{\beta,I} + \omega_m \cdot (\ell_d - \ell_q) \cdot i_{\beta,I} \cdot \sin 2\gamma + \omega_m \cdot \psi_M \cdot \cos(\gamma + \Delta\gamma)$$

$$u_{\alpha,II} = \frac{di_{\beta,II}}{d\tau} \cdot \frac{\ell_d - \ell_q}{2} \cdot \sin 2\gamma + \omega_m \cdot (\ell_d - \ell_q) \cdot i_{\beta,II} \cdot \cos 2\gamma - \omega_m \cdot \psi_M \cdot \sin(\gamma + \Delta\gamma)$$

$$u_{\beta,II} = k \cdot u_{\beta,I} = \frac{di_{\beta,II}}{d\tau} \cdot \left[ \frac{\ell_d + \ell_q}{2} - \frac{\ell_d - \ell_q}{2} \cdot \cos 2\gamma \right] + r_s \cdot i_{\beta,II} + \omega_m \cdot (\ell_d - \ell_q) \cdot i_{\beta,II} \cdot \sin 2\gamma + \omega_m \cdot \psi_M \cdot \cos(\gamma + \Delta\gamma)$$

$$k \in [-1, 0]$$

et la soustraction indique l'égalisation de la mesure de différence.

$$u_{\alpha,I} - u_{\alpha,II} = \frac{[di_{\beta,I} - di_{\beta,II}]}{d\tau} \cdot \frac{\ell_d - \ell_q}{2} \cdot \sin 2\gamma \qquad \text{(x)}$$

$$(1-k) \cdot u_{\beta,I} = \frac{[di_{\beta,I} - di_{\beta,II}]}{d\tau} \cdot \left[ \frac{\ell_d + \ell_q}{2} - \frac{\ell_d - \ell_q}{2} \cdot \cos 2\gamma \right] \qquad \text{(y)}$$

**9.** Procédure selon au moins une des exigences 1 à 8, **caractérisée par le fait que** l'angle calculé du rotor ou de circulation par rapport au rotor ou de la commande orientée champ de la machine, sera de préférence utilisé en fonctionnement simplifié avec deux phases conductrices et une phase hors tension.

**10.** Procédure selon au moins une des exigences 1 à 9, **caractérisée par le fait qu'**en cas de dépassement d'une vitesse de rotation minimale, la détermination de l'angle de rotor ou de circulation s'effectue avec un modèle de force électromotrice.

11. Configuration de circuit pour la réalisation de la procédure selon au moins une des exigences 1 à 10, **caractérisée par le fait qu'**une machine électrique rotative alimentée par un onduleur (5) avec un dispositif de mesure de tension (6) idéalement placé au niveau des bornes de connexion et, le cas échéant, un dispositif ampèremétrique (7) idéalement placé dans le circuit intermédiaire, où il est prévu qu'un ordinateur (8) traite les valeurs mesurées du dispositif de mesure de tension (6) et ampèremétrique (7), où il est prévu que l'ordinateur (8) détermine une information correspondant avec la situation du rotor ou de la circulation dans une unité de traitement des valeurs mesurées (9) et l'unité de traitement des valeurs mesurées (9) est liée avec une unité de commande (10), qui s'occupe de la commande (11) de disjoncteurs (4) d'une unité de puissance (3) sur la base de l'information obtenue de la part de l'unité de traitement des valeurs mesurées (9).

12. Configuration de circuit selon l'exigence 11, **caractérisée par le fait que** le circuit intermédiaire est lié à une alimentation en énergie électrique en amont via ses points de connexion (1, 2).

**FIG.**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9939430 A1
- DE 102006046638 A1
- DE 102006066638 A1